# EUROPEAN PATENT SPECIFICATION

(11) **EP 3 649 762 B1**
(45) Date of publication and mention of the grant of the patent: **28.12.2022**
(21) Application number: 18760001.0
(22) Date of filing: 04.07.2018
(51) Int. Cl.: H04L 41/0806, H04L 41/082, H04L 41/50

(54) **METHOD AND APPARATUS FOR RAPIDLY CONFIGURING NETWORK ELEMENT DEVICE FOR PLUG AND PLAY**
VERFAHREN UND VORRICHTUNG ZUR SCHNELLEN KONFIGURATION EINER NETZWERKELEMENTVORRICHTUNG FÜR PLUG AND PLAY
PROCÉDÉ ET APPAREIL DE CONFIGURATION RAPIDE DE DISPOSITIF D'ÉLÉMENT DE RÉSEAU POUR UNE UTILISATION DU TYPE PRÊT À L'EMPLOI

(30) Priority: 04.07.2017 CN 201710538844
(43) Date of publication of application: 13.05.2020
(73) Proprietor: Alcatel Lucent, 91620 Nozay (FR)
(72) Inventor: LI, Xinwei, Shanghai 201206 (CN); ZHA, Riyong, Shanghai 201206 (CN); XU, Meiqing, Shanghai 201206 (CN)
(74) Representative: Louis Pöhlau Lohrentz
(86) International application number: PCT/IB2018/000821
(87) International publication number: WO 2019/008436

(56) References cited:
- EP-A1- 2 582 089
- US-A1- 2014 310 358
- MICROSOFT: "How plug and play works", INTERNET CITATION, 28 March 2003 (2003-03-28), XP002411725, Retrieved from the Internet: URL:http://technet2.microsoft.com/WindowsS erver/en/library/8c5274be-2174-4205-83cd-0 8304633b5a31033.mspx?pf=true [retrieved on 2006-12-14]
- MACHIDON O M ET AL: "Remote project integration on an ATCA platform", ROEDUNET INTERNATIONAL CONFERENCE (ROEDUNET), 2013 11TH, IEEE, 17 January 2013 (2013-01-17), pages 1-4, XP032398078, DOI: 10.1109/ROEDUNET.2013.6511726 ISBN: 978-1-4673-6114-9

## Description

### Field of Invention

The present invention relates to the field of computer technologies, and in particular, to a technology for quickly configuring a network element device for plug and play.

### Background of Invention

MvPnP (Multi-vendor plug and play) technique which is defined by 3GPP meets technical requirement to support plug and play (PnP) solution for multi-vendor's telecom device into network to avoid manual configuration. However, MvPnP procedure spends long time and not standard enough to be compatible for network element (NE) devices of all vendors such as eNB, small cell, Femeto etc. When a new network element device is connected to the network, it has to spend more time to find related network and some manual configuration has to been done from element management system (EMS) side to make this device work.

In mobile network, since the network management protocol is not standard enough, different type of devices will use different methods to find related configuration information from EMS side.

As currently and commonly used implements, the PnP relies on the device-finding function of a DHCP server in the network for specific device. For example, for some specific vendors, if the function of PnP is needed, their device needs to be specially configured with the vendor-defined option of the DHCP server, that is, option 43. So such PnP server can work only for specific vendor, and can't be compatible for the interconnection of multi-vendors. Even if a DHCP server uses a vendor-specific configuration, that is, "option 43", software update and pre-configuration of a network element device is done by element management system EMS in current solution, which will cause several reset/restart for the hardware after the network element device is connected to the network. This could spend long time for element management system to initialize new hardware for first deployment. Several reset/restart can also happen for this new hardware, which will bring more alarms to the operator and cause operation confusion.

The shortage comes from 2 sides:
1) Option 43 in DHCP server for multi-vendor is a field defined by a vendor itself, the supports of which is less and less in recent years by some vendors;
2) No pre-configuration from the PnP server, which makes the configuration procedure too long when a new device can find related EMS.

In general, the operator expects a common DHCP server that can be used for PnP service, without the need of any vendor configuration with specific option of DHCP server; otherwise, it could be difficult to reach such target and it is impossible to implement multi-vendor's network element device inter-connection for PnP.

On the other side, from the operator view, the whole network element online duration will be calculated from element management system EMS by discovering the network element device to the network element device ready to work. Therefore, after several resets, the whole system online duration from being powered on to being online could be long as operator's view.

Therefore, how to provide a method and apparatus for quickly configuring a network element device for plug and play becomes one of the problems that need to be urgently solved by those skilled in the art.

Document EP 2 582 089 A1 relates to automatic configuration technology in batches for equipment and describes ande describes that a message is sent by the empty-configured equipment to a configuration server after establishing a TCP connection with the configuration server, wherein this message contains basic information including the MAC, the version and the equipment type etc. of the empty-configured equipment. Wherein the empty-configured equipment is restarted after obtaining the version file successfully. In particular, it also discloses that the process includes three steps: preparation of equipment parameters in network management, equipment state control, and interaction between empty-configured equipment and a configuration server. After the empty-configured equipment is added to network management, later a version binding operation and a configuration script binding operation need to be performed. The version binding may be obtained locally or from a network management version repository and the configuration may be also obtained locally or configured in batches by configuration templates. Document "How plug and play works", Microsoft, 28 March 2003, concerns the connection of a hardware device to a system, which foresees leaving the job of configuring and starting the device to the operating system, in particular when Plug and Play is supported.

### SUMMARY

The objectives of the present invention are achieved through the subject-matter of the independent claims 1, 7 and 10, respectively claiming a method for rapidly configuring a network element device for plug and play, a network element device and a PnP plug-in server. Preferred embodiments are set out in the dependent claims.

### Brief description of Drawings

Other features, objects, and advantages of the present invention will become more apparent by reading the following detailed description of non-limiting embodiments with reference to the following drawings:
FIG. 1 shows a schematic diagram of configuring a network element device for plug and play according to the prior art;
FIG. 2 shows a schematic flow chart of a method for quickly configuring a network element device for plug and play according to an aspect of the present invention;
FIG. 3 shows a schematic diagram of quickly configuring a network element device for plug and play according to a preferred embodiment of the present invention.

The same or similar reference numerals in the drawings denote the same or similar components.

### Detailed Description

The term "base station" used here may be regarded as synonymous to the following items and sometimes referred to as the following items infra: node B, evolved-type node B, eNodeB, eNB, transceiver base station (BTS), RNC, etc. and may describe a transceiver communicating with the mobile terminal and providing a wireless resource in a wireless communication network crossing a plurality of technical generations. Except the capabilities of implementing the method discussed above, the base station as discussed may have all functions associated with traditional well-known base stations.

The methods discussed infra may be implemented through hardware, software, firmware, middleware, microcode, hardware description language or any combination thereof. When they are implemented with software, firmware, middleware or microcode, the program code or code segment for executing essential tasks may be stored in a machine or a computer readable medium (e.g., storage medium). (One or more) processors may implement essential tasks.

The specific structures and function details disclosed here are only representative, for a purpose of describing the exemplary embodiments of the present invention. Instead, the present invention may be specifically implemented through many alternative embodiments. Therefore, it should not be appreciated that the present invention is only limited to the embodiments illustrated here. It should be understood that although terms "first," "second" might be used here to describe respective units, these units should not be limited by these terms. Use of these terms is only for distinguishing one unit from another. For example, without departing from the scope of the exemplary embodiments, the first unit may be referred to as the second unit, and similarly the second unit may be referred to as the first unit. The term "and/or" used here includes any and all combinations of one or more associated items as listed.

It should be understood that when one unit is "connected" or "coupled" to a further unit, it may be directly connected or coupled to the further unit or an intermediate unit may exist. In contrast, when a unit is "directly connected" or "directly coupled" to a further unit, an intermediate unit does not exist. Other terms (e.g., "disposed between" VS. "directly disposed between," "adjacent to" VS. "immediately adjacent to," and the like) for describing a relationship between units should be interpreted in a similar manner.

The terms used here are only for describing preferred embodiments, not intended to limit exemplary embodiments. Unless otherwise indicated, singular forms "a" or "one" used here further intends to include plural forms. It should also be appreciated that the terms "comprise" and/or "include" used here prescribe existence of features, integers, steps, operations, units and/or components as stated, but do not exclude existence or addition of one or more other features, integers, steps, operations, units, components, and/or a combination thereof.

It should also be noted that in some alternative embodiments, the functions/actions as mentioned may occur in an order different from what is indicated in the drawings. For example, dependent on the functions/actions involved, two successively illustrated diagrams may be executed substantially simultaneously or in a reverse order sometimes.

Unless otherwise defined, all terms (including technical and scientific terms) used here have meanings identical to what are generally understood by those skilled in the art within the field of exemplary embodiments. It should also be understood that unless explicitly defined here, those terms defined in commonly-used dictionaries should be interpreted to have meanings consistent in the context of relevant fields, and should not be interpreted according to ideal or too formal meanings.

The present invention will be further described in detail below with reference to the accompanying drawings.

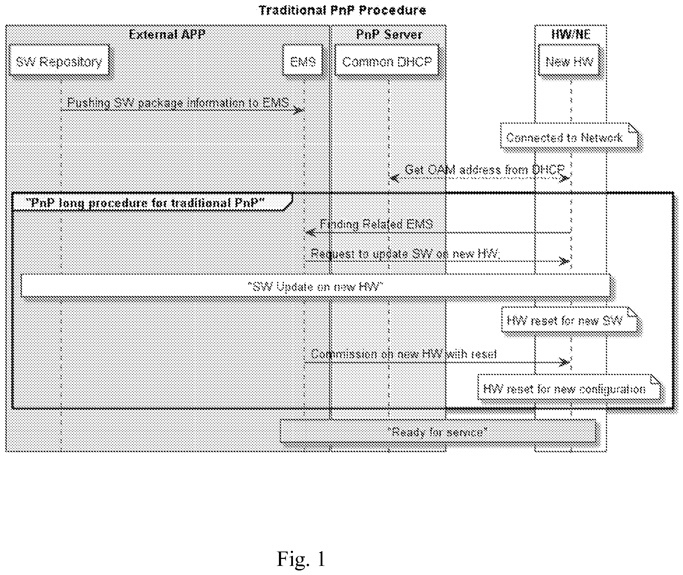

FIG. 1 shows a schematic diagram of configuring a network element device for plug and play according to the prior art.

In such a PnP process of connecting a conventional network element device to the network, the traditional PnP configuration process within the box will take a longer duration. It will cause network services for a few minutes (10 to 20 minutes), in which at least:
1) a software update is completed by the element management system EMS;
2) at least 2 resets are completed;
3) several decisive alarms will be caused in the element management system EMS.

In this traditional PnP process, software update and pre-configuration are all completed by the element management system EMS, so that it takes too long time for the network element device newly connected to the network to find the configuration process required for associating the EMS.

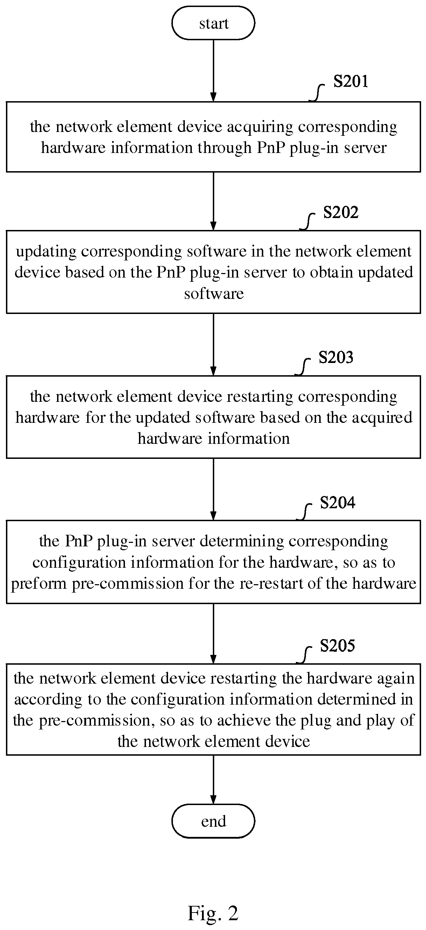

FIG. 2 shows a schematic flow chart of a method for quickly configuring a network element device for plug and play according to an aspect of the present invention.

In step S201, the network element device acquires the corresponding hardware information through a PnP plug-in server.

Specifically, the PnP plug-in server may interact with a third-party device in the cloud, for example, to acquire hardware information of various types of hardware stored in the third-party device. Therefore, in step S201, after the network element device is connected to the network, i.e., being powered on, it can obtain the hardware information corresponding to the network element device through the PnP plug-in server.

Here, the hardware information includes, but is not limited to, device type, device model, and the like. It should be understood by those skilled in the art that, the above hardware information is only illustrative and does not impose any practical limitation on the present invention. Other existing or future-possible hardware, if applicable to the present invention, should also be included in the scope of the present invention, and be incorporated herein by reference.

Preferably, in step S201, the network element device acquires the corresponding hardware information based on the MAC address information or the security gateway information through the PnP plug-in server.

Specifically, in step S201, the network element device requests the hardware and software information of the network element where the hardware is located from the corresponding PnP plug-in server based on the MAC address information of its own hardware, or the network element device can enable the PnP plug-in server to obtain the hardware and software information of the corresponding network element based on the security gateway information for connecting the device. For example, the corresponding security gateway may preset a device information repository in which software and hardware corresponding information of network elements corresponding to various types of devices are stored.

In step S202, the network element device updates the corresponding software in the network element device based on the PnP plug-in server, so as to obtain the updated software.

Specifically, the PnP plug-in server directs the network element device to update the software in. For example, in step S202, the PnP plug-in server sends the software package to the network element device in an active or passive manner. After the network element device obtains the software package, it updates the corresponding software on the network element device to obtain the updated software.

Preferably, the PnP plug-in server is located in the cloud and performs data exchange with a third-party device in the cloud, wherein the third-party device stores at least any one of the following:
hardware information;
configuration information;
software package; and
software package information.

Specifically, the PnP plug-in server is located in the cloud and acquires information such as hardware information, configuration information, software packages, and software package information or the like from third-party devices in the cloud through data exchange with third-party devices in the cloud, for example, through an active or passive method. Here, the configuration information also includes pre-configured information. After the PnP plug-in server obtains this information from the cloud, it actively, or at the request of the network element device, pushes or sends them to the corresponding network element device.

Here, these third-party devices located in the cloud may be separate multiple third-party devices, and the above information is stored in separate third-party devices; they may also be one third-party device, and all the foregoing information is stored in the third-party device.

Those skilled in the art should understand that, the foregoing information stored in the third-party device in the cloud is only exemplary and does not impose any practical limitation on the present invention. Other existing or future-possible information that may be stored in the third-party device in the cloud, if applicable to the present invention, should also be included within the protection scope of the present invention and be incorporated herein by reference.

In step S203, the network element device restarts the corresponding hardware for the updated software based on the acquired hardware information.

Specifically, in step S203, the network element device restarts the corresponding hardware for the software updated in step S202 based on the hardware information acquired in step S201.

In step S204, the PnP plug-in server determines the corresponding configuration information for the hardware so as to perform a pre-commission for the re-restart of the hardware.

Specifically, in step S204, the PnP plug-in server determines corresponding configuration information for the hardware of the network element device, for example, the configuration on physical connection of the hardware such as the physical port, the optical port, and the electrical port. These configurations are necessary configuration for running the network element device, for example, instructing which ports to perform which tasks, such as port 1 for wireless connection, port 2 for core network connection, etc., so as to perform pre-commission for the re-restart of the hardware of the network element device.

In step S205, the network element device restarts the hardware again according to the configuration information determined in the pre-commission, so as to achieve the plug and play of the network element device.

Specifically, in step S205, the network element device restarts the hardware in the network element device again according to the configuration information determined in the pre-commission in step S204. After performing two restarts of the hardware in the network element device, the network element device may further perform configuration verification with the element management system, thereby achieving the plug and play of the network element device. The process of configuration verification will be described in detail below.

Preferably, the method may further comprise step S206 (not shown) before step S201. In step S206, the network element device acquires the management plane address of the element management system (EMS) from the DHCP server which is a common DHCP server. In particular, the method further comprises step S207 (not shown). In step S207, after the network element device restarts the hardware again according to the configuration information determined in the pre-commission, it request a configuration verification from the element management system according to the management plane address; and the element management system performs configuration verification on the network element device according to the request, where if the configuration verification is passed, the network element device achieves plug and play.

Specifically, in step S206, the network element device may first acquire the management plane address of the element management system from the DHCP server, for example, by sending a request to the DHCP server via a DHCP request message. Based on the request, the DHCP server notifies the network element device of the operation administration and maintenance (OAM) server address, that is, the management plane address via a response message of DHCP service. Here, the DHCP server is a common DHCP server. And here, a common DHCP server can be used, instead of using different specific DHCP servers for different specific vendors as in the traditional PnP process. Therefore, plug and play of different network element devices of multiple vendors can be realized.

Subsequently, after the network element device restarts the hardware again according to the configuration information determined in the pre-commission in step S204, in step S207, the network element device requests configuration verification from the corresponding element management system according to the management plane address of the element management system acquired in step S206. The element management system then performs configuration verification on the network element device according to the request, for example, verifying whether the hardware information and software information of the network element device is consistent with the related storage information in the element management system. If they are consistent, the network element device passes the configuration verification, and it can achieve plug and play.

Here, only when the element management system performs configuration verification on the network element device, the element management system can see the network element device for the first time, and after passing the configuration verification, the network element device can start working. From the operator's point of view, it is equivalent to that, the network element device can start working as soon as the element management system EMS finds the network element device, that is, realizing the plug and play of the network element device.

Here, the solution only concerns the parameters of the management plane. Other parameters such as the user plane or the control plane can be obtained through other operations after the device completes the configuration. If the network element device is in the service state after passing configuration verification, it means that the network element device has had user plane- and control plane-parameters.

Here, the present method requires only a common DHCP server, rather than requiring a dedicated DHCP server as in the prior art; moreover, the element management system can see the network element device only during the configuration verification, and thus the process of the PnP plug-in server restarting the hardware is transparent to the user, as represented by the fact that the network element device can be used as soon as it is plugged in. While in the prior art, the element management system needs to participate from the beginning, the entire restarting process of the hardware can be seen by the user, and the process of getting on-line is long.

More preferably, if the configuration verification fails, the element management system directs the network element device to perform a hardware restart.

Specifically, after the element management system performs configuration verification on the network element device, for example, verifying whether the hardware and software information of the network element device is consistent with information in the element management system, and if being not consistent, that is, the network element device does not pass the configuration verification, the element management system can direct the network element device to perform a hardware restart.

For example, when the network element device does not pass the configuration verification, the element management system can re-direct the hardware restart of the network element device according to the traditional PnP procedure shown in FIG. 1 .

More preferably, the element management system acquires software package information from a software repository.

Specifically, the element management system may acquire the corresponding software package information from the software repository, thereby knowing the physical location of these software packages, and confirming whether the software version is consistent with the currently running software version. Here, the software repository can be located locally or can be located in the cloud. The software repository stores software packages and related information, and can actively push the software package information to the element management system.

Here, the present method introduces a new procedure for finding correct hardware configuration information during the PnP phase:
1) OAM server address assignment of DHCP;
2) Software updating;
3) Pre-configuration/pre-commission of service or network.

The main changes compared to traditional methods are in 3 areas:
1) The DHCP server protocol does not need to use the parameter Option 43, which can depend on the cloud's big data. It can be a new DHCP address assignment solution, making any common DHCP server work for the PnP server.
2) Software updates can be done under the direction the PnP server of the network;
3) Pre-configuration/pre-commission can be defined at the cloud level so that the PnP server can perform related work without the participation of the element management system.

This method can save the time of the hardware or network element device connecting to the real running network, and avoid the normal reset/restart required when it enters the real running network, by means of software updating or pre-configuration/pre-commission.

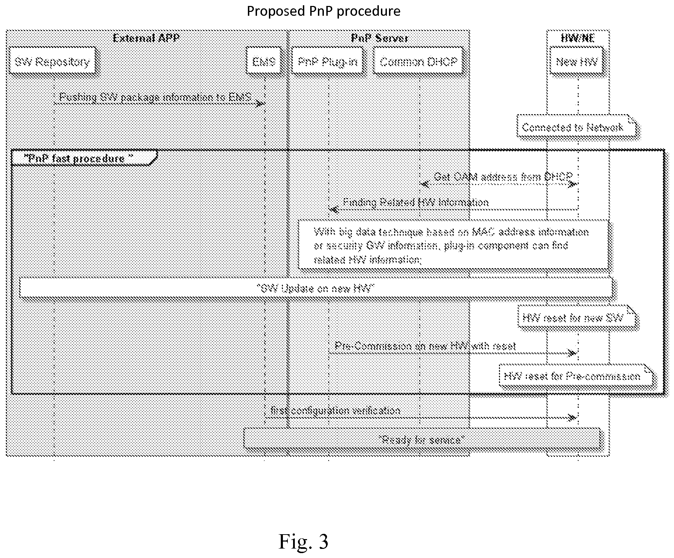

FIG. 3 shows a schematic diagram of quickly configuring a network element device for plug and play according to a preferred embodiment of the present invention.

The local or cloud software repository pushes the software package information to the element management system EMS. From this, the element management system knows the physical location of these software packages and confirms whether the software version is consistent with the software version currently running.

When a network element device, or so-called new hardware, is connected to the network, the network element device may first obtain the management plane address of the element management system from the common DHCP server, for example, obtaining an OAM server address from the corresponding DHCP server through a DHCP request message.

Then, the network element device obtains the corresponding hardware information through the PnP plug-in server. The PnP plug-in server may be located in the cloud, for example, and interacts with a third-party device in the cloud to obtain corresponding software and hardware information. The network element device performs search by means of big data technology in the cloud based on the MAC address information or the security gateway information through the PnP plug-in, so that the network element device can find related hardware information, such as the type and model of the device or the like.

Then, the network element device further updates the corresponding software in the network element device based on the PnP plug-in server, and obtains the updated software. For example, the network element device acquires the software package from the cloud through the PnP plug-in server and installs and updates the software, so that the software in the network element device is a new version of the software.

Then, based on the obtained hardware information, the network element device restarts the corresponding hardware for the updated software, that is, the new version of the software.

Thereafter, the PnP plug-in server determines corresponding configuration information for the hardware, for example, the configuration on the physical connection, for example, physical port, optical port, and electrical port of the hardware, so as to perform a pre-commission for re-restart of the hardware.

Then, the network element device restarts the hardware again for pre-commission, according to the configuration information determined in the foregoing pre-commission.

After the network element device restarts the hardware again according to the configuration information determined in the pre-commission, the network element device requests a first configuration verification from the corresponding element management system according to the management plane address acquired from the common DHCP server. If the first configuration verification is passed, the network element device achieves plug and play, indicating that the network element device is already in service state; if not, the element management system can follow the traditional PnP process, directing the network element device to restart the hardware.

According to another aspect of the present invention, there is provided a network element device that is quickly configured for plug and play, wherein the network element device comprises a first acquiring device, a software updating device, a first restarting device and a second restarting device.

Wherein, the first acquiring device acquires the corresponding hardware information through a PnP plug-in server.

Specifically, the PnP plug-in server may interact with a third-party device in the cloud, for example, to acquire hardware information of various types of hardware stored in the third-party device. Therefore, after the network element device is connected to the network, i.e., being powered on, the first acquiring device in it can obtain the hardware information corresponding to the network element device through the PnP plug-in server.

Here, the hardware information includes, but is not limited to, device type, device model, and the like. It should be understood by those skilled in the art that, the above hardware information is only illustrative and does not impose any practical limitation on the present invention. Other existing or future-possible hardware, if applicable to the present invention, should also be included in the scope of the present invention, and be incorporated herein by reference.

Preferably, the first acquiring device acquires the corresponding hardware information based on the MAC address information or the security gateway information through the PnP plug-in server.

Specifically, the first acquiring device acquires in the network element device requests the hardware and software information of the network element where the hardware is located from the corresponding PnP plug-in server based on the MAC address information of its own hardware, or the network element device can enable the PnP plug-in server to obtain the hardware and software information of the corresponding network element based on the security gateway information for connecting the device. For example, the corresponding security gateway may preset a device information repository in which software and hardware corresponding information of network elements corresponding to various types of devices are stored.

The software updating device updates the corresponding software in the network element device based on the PnP plug-in server, so as to obtain the updated software.

Specifically, the PnP plug-in server directs the network element device to update the software in. For example, the PnP plug-in server sends the software package to the network element device in an active or passive manner. After the software updating device in the network element device obtains the software package, it updates the corresponding software on the network element device to obtain the updated software.

The first restarting device restarts the corresponding hardware for the updated software based on the acquired hardware information.

Specifically, the first restarting device in the network element device restarts the corresponding hardware for the software updated by the software updating device based on the hardware information acquired by the first acquiring device.

The second restarting device restarts the hardware again according to the configuration information determined in the pre-commission, so as to achieve the plug and play of the network element device.

Specifically, the PnP plug-in server determines the corresponding configuration information for the hardware so as to perform a pre-commission for the re-restart of the hardware of the network element device. The second restarting device in the network element device restarts the hardware in the network element device again according to the configuration information determined in the pre-commission by the PnP plug-in server. After performing two restarts of the hardware in the network element device, the network element device may further perform configuration verification with the element management system, thereby achieving the plug and play of the network element device. The process of configuration verification will be described in detail below.

Preferably, the network element device comprises a second acquiring device and a first verification device. The second acquiring device acquires the management plane address of the element management system (EMS) from the DHCP server which is a common DHCP server. The first verification device restarts the hardware again according to the configuration information determined in the pre-commission, it request a configuration verification from the element management system according to the management plane address.

Specifically, the second acquiring device in the network element device may first acquire the management plane address of the element management system from the DHCP server, for example, by sending a request to the DHCP server via a DHCP request message. Based on the request, the DHCP server notifies the network element device of the operation administration and maintenance (OAM) server address, that is, the management plane address via a response message of DHCP service. Here, the DHCP server is a common DHCP server. And here, a common DHCP server can be used, instead of using different specific DHCP servers for different specific vendors as in the traditional PnP process. Therefore, plug and play of different network element devices of multiple vendors can be realized.

After the second restarting device in the network element device restarts the hardware again according to the configuration information determined in the pre-commission, the first verification device in the network element device requests configuration verification from the corresponding element management system according to the management plane address of the element management system acquired by the second acquiring device. The element management system then performs configuration verification on the network element device according to the request, for example, verifying whether the hardware information and software information of the network element device is consistent with the related storage information in the element management system. If they are consistent, the network element device passes the configuration verification, and it can achieve plug and play.

Here, only when the element management system performs configuration verification on the network element device, the element management system can see the network element device for the first time, and after passing the configuration verification, the network element device can start working. From the operator's point of view, it is equivalent to that, the network element device can start working as soon as the element management system EMS finds the network element device, that is, realizing the plug and play of the network element device.

Here, the solution only concerns the parameters of the management plane. Other parameters such as the user plane or the control plane can be obtained through other operations after the device completes the configuration. If the network element device is in the service state after passing configuration verification, it means that the network element device has had user plane- and control plane-parameters.

Here, the present method requires only a common DHCP server, rather than requiring a dedicated DHCP server as in the prior art; moreover, the element management system can see the network element device only during the configuration verification, and thus the process of the PnP plug-in server restarting the hardware is transparent to the user, as represented by the fact that the network element device can be used as soon as it is plugged in. While in the prior art, the element management system needs to participate from the beginning, the entire restarting process of the hardware can be seen by the user, and the process of getting on-line is long.

According to another aspect of the present invention, there is provided a PnP plug-in server for quickly configuring a network element device for plug and play, wherein the PnP plug-in server comprises a first sending device, a second sending device and a pre-commission device.

Wherein, the first sending device sends corresponding hardware information to corresponding network element device.

Specifically, the PnP plug-in server may interact with a third-party device in the cloud, for example, to acquire hardware information of various types of hardware stored in the third-party device. Therefore, after the network element device is connected to the network, i.e., being powered on, it can obtain the hardware information corresponding to the network element device through the PnP plug-in server. The first sending device in the PnP plug-in server sends corresponding hardware information to corresponding network element device.

Here, the hardware information includes, but is not limited to, device type, device model, and the like. It should be understood by those skilled in the art that, the above hardware information is only illustrative and does not impose any practical limitation on the present invention. Other existing or future-possible hardware, if applicable to the present invention, should also be included in the scope of the present invention, and be incorporated herein by reference.

The second sending device sends corresponding software package to the network element device so as to update the corresponding software and restart corresponding hardware for the updated software based on the acquired hardware information.

Specifically, the PnP plug-in server directs the network element device to update the software in. For example, the second sending device in the PnP plug-in server sends the software package to the network element device in an active or passive manner. After the network element device obtains the software package, it updates the corresponding software on the network element device to obtain the updated software. Then, the network element device restarts the corresponding hardware for the updated software based on the acquired hardware information.

The pre-commission device determines corresponding configuration information for the hardware of the network element device, so as to perform pre-commission for the re-restart of the hardware.

Specifically, the pre-commission device in the PnP plug-in server determines corresponding configuration information for the hardware of the network element device, for example, the configuration on physical connection of the hardware such as the physical port, the optical port, and the electrical port. These configurations are necessary configuration for running the network element device, for example, instructing which ports to perform which tasks, such as port 1 for wireless connection, port 2 for core network connection, etc., so as to perform pre-commission for the re-restart of the hardware of the network element device.

Preferably, the PnP plug-in server is located in the cloud and performs data exchange with a third-party device in the cloud, wherein the third-party device stores at least any one of the following:
hardware information;
configuration information;
software package; and
software package information.

Specifically, the PnP plug-in server is located in the cloud and acquires information such as hardware information, configuration information, software packages, and software package information or the like from third-party devices in the cloud through data exchange with third-party devices in the cloud, for example, through an active or passive method. Here, the configuration information also includes pre-configured information. After the PnP plug-in server obtains this information from the cloud, it actively, or at the request of the network element device, pushes or sends them to the corresponding network element device.

Here, these third-party devices located in the cloud may be separate multiple third-party devices, and the above information is stored in separate third-party devices; they may also be one third-party device, and all the foregoing information is stored in the third-party device.

Those skilled in the art should understand that, the foregoing information stored in the third-party device in the cloud is only exemplary and does not impose any practical limitation on the present invention. Other existing or future-possible information that may be stored in the third-party device in the cloud, if applicable to the present invention, should also be included within the protection scope of the present invention and be incorporated herein by reference.

According to another aspect of the present invention, there is provided an element management system for quickly configuring a network element device for plug and play, wherein the element management system comprises a second verification device.

Wherein, the second verification device performs configuration verification on the network element device according to the request of the network element device after the network element device restarts the hardware again for the pre-commission, where if the configuration verification is passed, the network element device achieves plug and play.

Specifically, after the network element device restarts the hardware again according to the configuration information determined in the pre-commission, the network element device requests configuration verification from the corresponding element management system according to the management plane address of the element management system acquired. The second verification device in the element management system then performs configuration verification on the network element device according to the request, for example, verifying whether the hardware information and software information of the network element device is consistent with the related storage information in the element management system. If they are consistent, the network element device passes the configuration verification, and it can achieve plug and play.

Here, only when the element management system performs configuration verification on the network element device, the element management system can see the network element device for the first time, and after passing the configuration verification, the network element device can start working. From the operator's point of view, it is equivalent to that, the network element device can start working as soon as the element management system EMS finds the network element device, that is, realizing the plug and play of the network element device.

Here, the solution only concerns the parameters of the management plane. Other parameters such as the user plane or the control plane can be obtained through other operations after the device completes the configuration. If the network element device is in the service state after passing configuration verification, it means that the network element device has had user plane- and control plane-parameters.

Here, the present method requires only a common DHCP server, rather than requiring a dedicated DHCP server as in the prior art; moreover, the element management system can see the network element device only during the configuration verification, and thus the process of the PnP plug-in server restarting the hardware is transparent to the user, as represented by the fact that the network element device can be used as soon as it is plugged in. While in the prior art, the element management system needs to participate from the beginning, the entire restarting process of the hardware can be seen by the user, and the process of getting on-line is long.

Preferably, the element management system comprises a directing device. If the configuration verification fails, the directing device directs the network element device to perform a hardware restart.

Specifically, after the element management system performs configuration verification on the network element device, for example, verifying whether the hardware and software information of the network element device is consistent with information in the element management system, and if being not consistent, that is, the network element device does not pass the configuration verification, the directing device in the element management system can direct the network element device to perform a hardware restart. For example, when the network element device does not pass the configuration verification, the directing device in the element management system can re-direct the hardware restart of the network element device according to the traditional PnP procedure shown in FIG. 1 .

Preferably, the element management system comprises a third acquiring device. The third acquiring device acquires software package information from a software repository.

Specifically, the third acquiring device in the element management system may acquire the corresponding software package information from the software repository, thereby knowing the physical location of these software packages, and confirming whether the software version is consistent with the currently running software version. Here, the software repository can be located locally or can be located in the cloud. The software repository stores software packages and related information, and can actively push the software package information to the element management system.

Here, the present solution introduces a new procedure for finding correct hardware configuration information during the PnP phase:
1) OAM server address assignment of DHCP;
2) Software updating;
3) Pre-configuration/pre-commission of service or network.

The main changes compared to traditional solution are in 3 areas:
1) The DHCP server protocol does not need to use the parameter Option 43, which can depend on the cloud's big data. It can be a new DHCP address assignment solution, making any common DHCP server work for the PnP server.
2) Software updates can be done under the direction the PnP server of the network;
3) Pre-configuration/pre-commission can be defined at the cloud level so that the PnP server can perform related work without the participation of the element management system.

This solution can save the time of the hardware or network element device connecting to the real running network, and avoid the normal reset/restart required when it enters the real running network, by means of software updating or pre-configuration/pre-commission.

It should be noted that the present disclosure may be implemented in software or a combination of software and hardware; for example, it may be implemented by a dedicated integrated circuit (ASIC), a general-purpose computer, or any other similar hardware device. In an embodiment, the software program of the present disclosure may be executed by a processor so as to implement the above steps or functions. Likewise, the software program of the present disclosure (including relevant data structure) may be stored in a computer readable recording medium, for example, a RAM memory, a magnetic or optical driver, or a floppy disk, and similar devices. Besides, some steps of functions of the present disclosure may be implemented by hardware, for example, a circuit cooperating with the processor to execute various functions or steps.

Besides, a part of the present invention may be applied as a computer program product, for example, a computer program instruction, which, when executed by a computer, through the operation of the computer, may invoke or provide the method and/or technical solution of the present invention. However, the program instruction invoking the method of the present invention may be stored in a fixed or mobile recording medium, and/or transmitted through a data stream in broadcast or other signal carrier medium, and/or stored in a working memory of a computer device running according to the program instruction. Here, one embodiment according to the present invention comprises an apparatus that includes a memory for storing computer program instructions and a processor for executing program instructions, wherein when the computer program instructions are executed by the processor, the apparatus is triggered to run the methods and/or technical solutions based on the previously mentioned multiple embodiments of the present invention.

## Claims

1. A method for rapidly configuring a network element device for plug and play, wherein the method comprises:
a. the network element device acquiring (S201) corresponding hardware information through a PnP plug-in server;
b. updating (S202) corresponding software in the network element device based on the PnP plug-in server to obtain updated software;
c. the network element device restarting (S203) corresponding hardware for the updated software based on the acquired hardware information;
d. the PnP plug-in server determining (S204) corresponding configuration information for the hardware, and performing pre-commission for the re-restart of the hardware; and
e. the network element device restarting (S205) the hardware again according to the configuration information determined in the pre-commission;
f. the network element device achieving plug and play.

2. The method according to claim 1, wherein before step a the method further comprises:
the network element device acquiring a management plane address of an element management system from a DHCP server, wherein the DHCP server is a common DHCP server;
wherein the method further comprises:
after the network element device restarts the hardware again according to the configuration information determined in the pre-commission, it requests configuration verification from the element management system according to the management plane address;
the element management system performing configuration verification on the network element device according to the request, where if the configuration verification is passed, the network element device achieves plug and play.

3. The method according to claim 2, wherein if the configuration verification fails, the element management system directs the network element device to perform a hardware restart.

4. The method according to claim 2 or 3, wherein the method further comprises:
the element management system acquiring software package information from a software repository.

5. The method according to any one of claims 1 to 4, wherein step a. comprises:
the network element device acquiring corresponding hardware information based on MAC address information or security gateway information through the PnP plug-in server.

6. The method according to any one of claims 1 to 5, wherein the PnP plug-in server is located in a cloud and performs data exchange with a third-party device in the cloud, wherein the third-party device stores at least any one of the following:
hardware information;
configuration information;
software package; and
software package information.

7. A network element device that is quickly configured for plug and play, wherein the network element device comprises:
a first acquiring device for acquiring corresponding hardware information through a PnP plug-in server;
a software updating device for updating corresponding software in the network element device based on the PnP plug-in server to obtain updated software;
a first restarting device for restarting corresponding hardware for the updated software based on the acquired hardware information;
a second restarting device for restarting the hardware again according to the configuration information determined by the PnP plug-in server in the pre-commission and for achieving plug and play of the network element device.

8. The network element device according to claim 7, wherein the network element device comprises:
a second acquiring device for acquiring a management plane address of an element management system from a DHCP server, wherein the DHCP server is a common DHCP server;
a first verification device for requesting configuration verification from the element management system according to the management plane address after restarting the hardware again according to the configuration information determined in the pre-commission.

9. The network element device according to claim 7 or 8, wherein the first acquiring device is used for:
acquiring corresponding hardware information based on MAC address information or security gateway information through the PnP plug-in server.

10. A PnP plug-in server for quickly configuring a network element device for plug and play, wherein the PnP plug-in server comprises:
a first sending device for sending corresponding hardware information to corresponding network element device;
a second sending device for sending corresponding software package to the network element device, and for causing the corresponding network element device to update the corresponding software and restart corresponding hardware for the updated software based on the acquired hardware information; and
a pre-commission device for determining corresponding configuration information for the hardware of the network element device, and for performing pre-commission for the re-restart of the hardware.

11. The PnP plug-in server according to claim 10, wherein the PnP plug-in server is located in a cloud and performs data exchange with a third-party device in the cloud, wherein the third-party device stores at least any one of the following:
hardware information;
configuration information;
software package; and
software package information.

## Patentansprüche

1. Verfahren zum schnellen Auslegen einer Netzwerkelementvorrichtung für Plug and Play, wobei das Verfahren Folgendes umfasst:
a. Erfassen (S201) von entsprechenden Hardwareinformationen über einen PnP-Pluginserver durch die Netzwerkelementvorrichtung;
b. Aktualisieren (S202) einer entsprechenden Software in der Netzwerkelementvorrichtung auf Basis des PnP-Pluginservers, um eine aktualisierte Software zu erhalten;
c. Neustarten (S203) einer entsprechenden Hardware für die aktualisierte Software durch die Netzwerkelementvorrichtung auf Basis der erfassten Hardwareinformationen;
d. Bestimmen (S204) von entsprechenden Auslegungsinformationen für die Hardware und Durchführen einer Vorinbetriebnahme für den Neustart der Hardware durch den PnP-Pluginserver; und
e. erneutes Neustarten (S205) der Hardware gemäß den Auslegungsinformationen, die bei der Vorinbetriebnahme bestimmt werden, durch die Netzwerkelementvorrichtung;
f. Erreichen von Plug and Play durch die Netzwerkelementvorrichtung.

2. Verfahren nach Anspruch 1, wobei das Verfahren vor Schritt a ferner Folgendes umfasst:
Erfassen einer Verwaltungsebenenadresse eines Elementverwaltungssystems durch die Netzwerkelementvorrichtung von einem DHCP-Server, wobei der DHCP-Server ein gemeinsamer DHCP-Server ist;
wobei das Verfahren ferner Folgendes umfasst:
nachdem die Netzwerkelementvorrichtung gemäß den bei der Vorinbetriebnahme bestimmten Auslegungsinformationen einen erneuten Neustart an der Hardware vorgenommen hat, fordert sie eine Auslegungsverifizierung vom Elementverwaltungssystem gemäß der Verwaltungsebenenadresse an;
Durchführen einer Auslegungsverifizierung durch das Elementverwaltungssystem an der Netzwerkelementvorrichtung gemäß der Anforderung, wo, wenn die Auslegungsverifizierung bestanden wird, die Netzwerkelementvorrichtung Plug and Play erreicht.

3. Verfahren nach Anspruch 2, wobei, wenn die Auslegungsverifizierung fehlschlägt, das Elementverwaltungssystem die Netzwerkelementvorrichtung anweist, einen Hardwareneustart durchzuführen.

4. Verfahren nach Anspruch 2 oder 3, wobei das Verfahren ferner Folgendes umfasst:
Erfassen von Softwarepaketinformationen durch das Elementverwaltungssystem von einem Softwarerepositorium.

5. Verfahren nach einem der Ansprüche 1 bis 4, wobei Schritt a. Folgendes umfasst:
Erfassen von entsprechenden Hardwareinformationen durch die Netzwerkelementvorrichtung auf Basis von MAC-Adressinformationen oder Sicherheitsgatewayinformationen über den PnP-Pluginserver.

6. Verfahren nach einem der Ansprüche 1 bis 5, wobei sich der PnP-Pluginserver in einer Cloud befindet und in der Cloud einen Datenaustausch mit einer Drittanbietervorrichtung durchführt, wobei die Drittanbietervorrichtung mindestens eines von Folgendem speichert:
Hardwareinformationen;
Auslegungsinformationen;
ein Softwarepaket; und
Softwarepaketinformationen.

7. Netzwerkelementvorrichtung, die schnell für Plug and Play ausgelegt wird, wobei die Netzwerkelementvorrichtung Folgendes umfasst:
eine erste Erfassungsvorrichtung zum Erfassen von entsprechenden Hardwareinformationen über einen PnP-Pluginserver;
eine Softwareaktualisierungsvorrichtung zum Aktualisieren einer entsprechenden Software in der Netzwerkelementvorrichtung auf Basis des PnP-Pluginservers, um eine aktualisierte Software zu erhalten;
eine erste Neustartvorrichtung zum Neustarten einer entsprechenden Hardware für die aktualisierte Software auf Basis der erfassten Hardwareinformationen;
eine zweite Neustartvorrichtung zum erneuten Neustarten der Hardware gemäß den durch den PnP-Pluginserver bei der Vorinbetriebnahme bestimmten Auslegungsinformationen und zum Erreichen von Plug and Play der Netzwerkelementvorrichtung.

8. Netzwerkelementvorrichtung nach Anspruch 7, wobei die Netzwerkelementvorrichtung Folgendes umfasst:
eine zweite Erfassungsvorrichtung zum Erfassen einer Verwaltungsebenenadresse eines Elementverwaltungssystems von einem DHCP-Server, wobei der DHCP-Server ein gemeinsamer DHCP-Server ist;
eine erste Verifizierungsvorrichtung zum Anfordern einer Auslegungsverifizierung gemäß der Verwaltungsebenenadresse vom Elementverwaltungssystem nach dem erneuten Neustart der Hardware gemäß den bei der Vorinbetriebnahme bestimmten Auslegungsinformationen.

9. Netzwerkelementvorrichtung nach Anspruch 7 oder 8, wobei die erste Erfassungsvorrichtung für Folgendes verwendet wird:
Erfassen von entsprechenden Hardwareinformationen auf Basis von MAC-Adressinformationen oder Sicherheitsgatewayinformationen über den PnP-Pluginserver.

10. PnP-Pluginserver zum schnellen Auslegen einer Netzwerkelementvorrichtung für Plug and Play, wobei der PnP-Pluginserver Folgendes umfasst:
eine erste Sendevorrichtung zum Senden von entsprechenden Hardwareinformationen an die entsprechende Netzwerkelementvorrichtung;
eine zweite Sendevorrichtung zum Senden eines entsprechenden Softwarepakets an die Netzwerkelementvorrichtung und zum Bewirken, dass die entsprechende Netzwerkelementvorrichtung die entsprechende Software aktualisiert und die entsprechende Hardware für die aktualisierte Software auf Basis der erfassten Hardwareinformationen neu startet; und
eine Vorinbetriebnahmevorrichtung zum Bestimmen von entsprechenden Auslegungsinformationen für die Hardware der Netzwerkelementvorrichtung und zum Durchführen einer Vorinbetriebnahme für den Neustart der Hardware.

11. PnP-Pluginserver nach Anspruch 10, wobei sich der PnP-Pluginserver in einer Cloud befindet und in der Cloud einen Datenaustausch mit einer Drittanbietervorrichtung durchführt, wobei die Drittanbietervorrichtung mindestens eines von Folgendem speichert:
Hardwareinformationen;
Auslegungsinformationen;
ein Softwarepaket; und
Softwarepaketinformationen.

## Revendications

1. Procédé pour configurer rapidement un dispositif d'élément de réseau pour le prêt à l'emploi, dans lequel le procédé comprend les étapes suivantes :
a. le dispositif d'élément de réseau acquiert (S201) des informations matérielles correspondantes à travers un serveur à module d'extension PnP ;
b. mis à jour (S202) d'un logiciel correspondant dans le dispositif d'élément de réseau sur la base du serveur à module d'extension PnP pour obtenir un logiciel mis à jour ;
c. le dispositif d'élément de réseau redémarre (S203) un matériel correspondant pour le logiciel mis à jour sur la base des informations matérielles acquises ;
d. le serveur à module d'extension PnP détermine (S204) des informations de configuration correspondantes pour le matériel, et effectue une pré-mise en service pour le redémarrage du matériel ; et
e. le dispositif d'élément de réseau redémarre (S205) le matériel à nouveau selon les informations de configuration déterminées dans la pré-mise en service ;
f. le dispositif d'élément de réseau réalise un prêt à l'emploi.

2. Procédé selon la revendication 1, dans lequel avant l'étape a. le procédé comprend en outre l'étape suivante :
le dispositif d'élément de réseau acquiert une adresse de plan de gestion d'un système de gestion d'élément à partir d'un serveur DHCP, dans lequel le serveur DHCP est un serveur DHCP commun ;
dans lequel le procédé comprend en outre :
après que le dispositif d'élément de réseau a redémarré le matériel à nouveau selon les informations de configuration déterminées dans la pré-mise en service, il demande une vérification de configuration au système de gestion d'élément selon l'adresse de plan de gestion ;
le système de gestion d'élément effectue une vérification de configuration sur le dispositif d'élément de réseau selon la demande, où si la vérification de configuration est réussie, le dispositif d'élément de réseau réalise le prêt à l'emploi.

3. Procédé selon la revendication 2, dans lequel si la vérification de configuration échoue, le système de gestion d'élément ordonne au dispositif d'élément de réseau d'effectuer un redémarrage de matériel.

4. Procédé selon la revendication 2 ou 3, dans lequel le procédé comprend en outre l'étape suivante :
le système de gestion d'élément acquiert des informations de progiciel à partir d'un référentiel de logiciels.

5. Procédé selon l'une quelconque des revendications 1 à 4, dans lequel l'étape a. comprend l'étape suivante :
le dispositif d'élément de réseau acquiert des informations matérielles correspondantes sur la base d'informations d'adresse MAC ou d'informations de passerelle de sécurité à travers le serveur à module d'extension PnP.

6. Procédé selon l'une quelconque des revendications 1 à 5, dans lequel le serveur à module d'extension PnP est situé dans un nuage et effectue un échange de données avec un dispositif tiers dans le nuage, dans lequel le dispositif tiers stocke au moins l'un quelconque des éléments suivants :
des informations matérielles ;
des informations de configuration ;
un progiciel ; et
des informations de progiciel.

7. Dispositif d'élément de réseau qui est rapidement configuré pour le prêt à l'emploi, dans lequel le dispositif d'élément de réseau comprend :
un premier dispositif d'acquisition pour acquérir des informations matérielles correspondantes à travers un serveur à module d'extension PnP ;
un dispositif de mise à jour de logiciel pour mettre à jour un logiciel correspondant dans le dispositif d'élément de réseau sur la base du serveur à module d'extension PnP pour obtenir un logiciel mis à jour ;
un premier dispositif de redémarrage pour redémarrer un matériel correspondant pour le logiciel mis à jour sur la base des informations matérielles acquises ;
un deuxième dispositif de redémarrage pour redémarrer le matériel à nouveau selon les informations de configuration déterminées par le serveur à module d'extension PnP dans la pré-mise en service et pour réaliser un prêt à l'emploi du dispositif d'élément de réseau.

8. Dispositif d'élément de réseau selon la revendication 7, dans lequel le dispositif d'élément de réseau comprend :
un deuxième dispositif d'acquisition pour acquérir une adresse de plan de gestion d'un système de gestion d'élément à partir d'un serveur DHCP, dans lequel le serveur DHCP est un serveur DHCP commun ;
un premier dispositif de vérification pour demander une vérification de configuration au système de gestion d'élément selon l'adresse de plan de gestion après le redémarrage du matériel à nouveau selon les informations de configuration déterminées dans la pré-mise en service.

9. Dispositif d'élément de réseau selon la revendication 7 ou 8, dans lequel le premier dispositif d'acquisition est utilisé pour :
acquérir des informations matérielles correspondantes sur la base d'informations d'adresse MAC ou d'informations de passerelle de sécurité à travers le serveur à module d'extension PnP.

10. Serveur à module d'extension PnP pour configurer rapidement un dispositif d'élément de réseau pour le prêt à l'emploi, dans lequel le serveur à module d'extension PnP comprend :
un premier dispositif d'envoi pour envoyer des informations matérielles correspondantes à un dispositif d'élément de réseau correspondant ;
un deuxième dispositif d'envoi pour envoyer un progiciel correspondant au dispositif d'élément de réseau, et pour amener le dispositif d'élément de réseau correspondant à mettre à jour le logiciel correspondant et à redémarrer un matériel correspondant pour le logiciel mis à jour sur la base des informations matérielles acquises ; et
un dispositif de pré-mise en service pour déterminer des informations de configuration correspondantes pour le matériel du dispositif d'élément de réseau, et effectuer une pré-mise en service pour le redémarrage du matériel.

11. Serveur à module d'extension PnP selon la revendication 10, dans lequel le serveur à module d'extension PnP est situé dans un nuage et effectue un échange de données avec un dispositif tiers dans le nuage, dans lequel le dispositif tiers stocke au moins l'un des éléments suivants :
des informations matérielles ;
des informations de configuration ;
un progiciel ; et
des informations de progiciel.
